# EUROPEAN PATENT APPLICATION

(11) **EP 2 800 394 A1**
(43) Date of publication of application: **05.11.2014**
(21) Application number: 14165534.0
(22) Date of filing: 23.04.2014
(51) Int. Cl.: H04N 21/454, H04N 21/45, H04N 21/441, H04N 21/475, H04N 21/488, H04N 21/426

(54) **Method and apparatus for updating of supplementary information in TV programs**

(30) Priority: 02.05.2013 EP 13305577
(71) Applicant: Thomson Licensing, 92130 Issy-les-Moulineaux (FR)
(72) Inventor: Demoulin, Vincent, 35160 Montfort sur Mer (FR); Thudor, Franck, 35000 Rennes (FR); Marquant, Gwenaelle, 35630 La Chapelle Chaussée (FR)
(74) Representative: Rossmanith, Manfred

(57) **Abstract**

A method and a TV receiver for updating child protection information on the TV receiver are suggested. The suggested method scans receivable TV channels, searches for child protection information and stores such information together with the associated TV channel number in a memory. If the user switches to a new TV channel then as a first step it is checked if for the newly selected TV channel child protection information is stored and if it is within a predefined allowed range. In this way adolescent users are effectively protected against offensive content.

## Description

### Technical Field

The present invention is related to a method and an apparatus for updating supplementary information in TV programs. In particular, the invention is related to a method and an apparatus for providing a reliable display of child protection or youth protection information.

### Background

TV logo detection plays an important role in child protection. In some countries like in France child protection logos or icons are used to communicate to the user that some programs should not be watched by children below a certain age. In other countries for example in Germany a text insertion is displayed before the program starts informing about child protection. Sometimes there is also a combination of text insertion and logo or icon. However, in some programs or TV broadcasts these kinds of text insertion or logos appear only for a short period of time at the beginning of the program. If the user switches the TV receiver on or changes to another channel after the beginning of the program then the user may miss the information that the program is not appropriate for children under a given age.

Consequently, there remains a need to improve child protection information at least in those countries where such kind of information is not permanently broadcasted in conjunction with the TV program but only at the beginning of a program.

### Summary

The present invention suggests a method and a TV receiver for providing child protection information on the TV receiver. The inventive method scans receivable TV channels, searches for child protection information and stores such information together with the associated TV channel number in a memory. If the user switches to a new TV channel then as a first step it is checked if for the newly selected TV channel child protection information is stored and if it is within a predefined allowed range. Eventually, the display of the TV program is blocked if predefined conditions are not met. In this way adolescent users are effectively protected against offensive content.

According to a first aspect, the present invention suggests a method for updating and making available children protection information. The method comprises the following steps:
- scanning with a scanning tuner receivable TV channels;
- detecting sequentially child protection information contained in the video signal of received TV channels; and
- storing the child protection information in conjunction with the associated TV channel in a memory.

According to an embodiment of the present invention the method further comprises the step of
- tuning to a TV channel selected by a user;
- checking if for the selected TV channel child protection information is stored, and if such child protection information is found, then
- verifying if the child protection information is within a predefined range;
- displaying the image of the selected TV channel if the child protection information is within the predefined allowed range; and
- executing a user defined action if the child protection information is outside the predefined allowed range. This implementation of the present invention enables effective protection of the viewers from offensive content.

Advantageously, the method can comprise the step of displaying the stored child protection information together with the image of the selected TV channel for a limited period of time. This embodiment allows informing the user about an existing child protection information regardless of when he switches to a program.

In a useful development a message is displayed informing the user that the selected TV channel is associated with a child protection information outside the allowed range. In this way the user is informed why no image is displayed on the TV screen and confusion of the user is avoided.

In an advantageous embodiment the method further comprises the steps of verifying if the TV receiver is operated within an open time window if no child protection information is found. The image of the selected TV channel is displayed if the TV receiver is operated within the open time window. A user defined action is executed if the TV receiver is operating outside the open time window. This embodiment of the invention uses the fact that offensive content is mainly broadcasted in the late evening and not when it is likely that the entire family is watching a TV program. In the present patent application this latter period of time is called "open time window". Therefore, during this open time window it is acceptable that the image of the TV program is displayed even when no child protection information is available. Only outside the open time window the display of the image is e.g. blocked as a matter of precaution.

Advantageously, the method may further comprise the step of displaying a message requesting the user to enter a code to enable the display of the selected TV channel. It is an advantage for the user if he can enable a TV program which was blocked automatically by the TV receiver. The user can do that by entering a corresponding code.

In an alternative embodiment the method comprises the step of displaying a list of receivable TV channels in conjunction with the associated and stored child protection information upon user request. In this way the user may browse through the receivable TV channels having child protection information within the allowed range. The user avoids the experience that the image of a certain TV channel is blocked and can select a desired TV channel faster.

As a simple and effective way of protecting children from offensive content an embodiment of the inventive method provides for blocking the image of the selected TV channel e.g. if the child protection is outside the allowed range. Other conditions can also be defined by the user.

According to a second aspect, the present invention suggests a television receiver for updating and making available children protection information. The television receiver includes a first and a second tuner, a digital signal processing unit and a memory. The first and the second tuner provide signal data to the digital signal processing unit. The first tuner is controlled to tune to the TV channel selected by a user The second tuner scans receivable TV channels. The digital signal processing unit is adapted to detect child protection information in the TV channels scanned by the second tuner and to store the child protection information in conjunction with the associated channel number in the memory.

In an advantageous embodiment, TV channel navigation is restricted to those TV channels which are associated with child protection information within a predefined allowed range. Adolescent users are not even tempted to watch inappropriate TV programs.

In alternative embodiment of the inventive television receiver TV channel navigation is restricted to those TV channels associated with child protection information within a predefined allowed range or to those TV channels for which no child protection information is stored for the selected TV channel when the TV receiver is operated within a predefined open time window. This alternative embodiment enables a user to surf freely through all TV channels when the TV receiver is operated in the open time window. Only outside the allowed time window TV channel navigation is restricted again.

### Brief Description of the Drawings

In the drawings, an embodiment of the present invention is illustrated. It shows:
Figs. 1A and 1B the display of children protection information in two different formats;
Fig. 2 a schematic block diagram of a television receiver implementing the present invention;
Fig. 3 a schematic flow diagram illustrating the method of storing logo and channel information; and
Fig. 4 a schematic flow diagram of a method for improving child protection.

Similar or same elements are referenced with the same reference numbers.

### Detailed description

In the entire specification of the present patent application, the term "program" refers to broadcasted content. The term "channel" is used to distinguish different parts of the electromagnetic spectrum allocated to different broadcasters. For example, a broadcasting company broadcasts in one or several channels a TV show representing the program of this broadcaster.

In the present patent application, the terms "television receiver" or "receiver" refer to any device which incorporate a tuner for tuning a particular channel within an incoming television signal including, but not limited to, television sets, DVD players, BD players, set-top boxes, PC card, etc. It is noted that a television set includes a display and necessary driver circuit for driving the display.

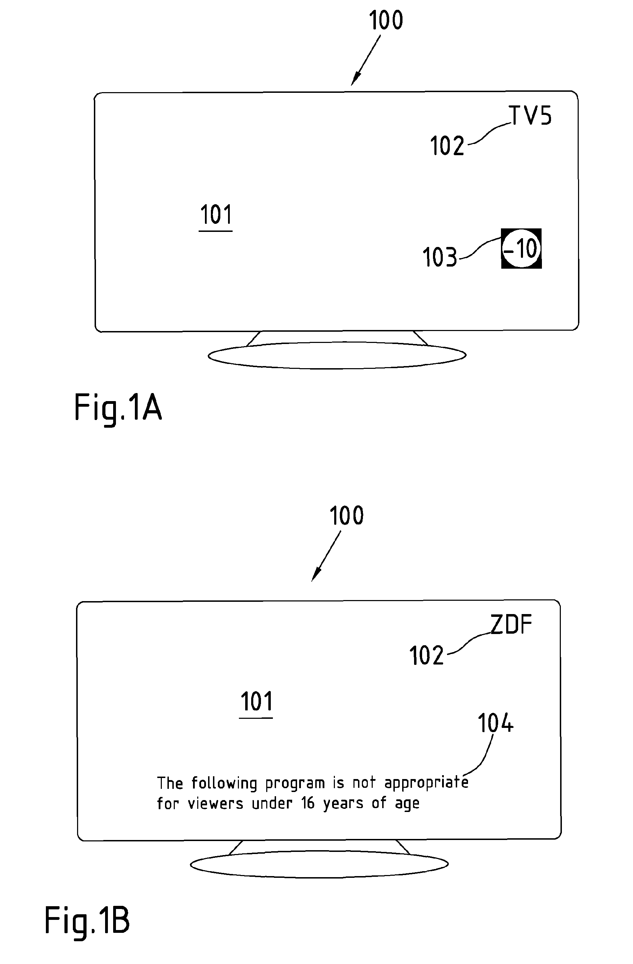

Figure 1A displays schematically the front view of a TV set 100. The TV set 100 includes a TV screen 101 for displaying images. In Figure 1A, the displayed image of the program received by the TV set is not shown for the sake of simplicity. In the upper right corner of the TV screen 101 the logo 102 of the broadcaster "TV5" is displayed to inform the user to which broadcaster he has tuned. In the lower right corner an child protection logo 103 is displayed. The child protection logo 103 has a format which is used in France. The child protection logo 103 shown in Figure 1A means that the currently received program is not appropriate for children under the age of 10.

Figure 1B also shows a front view of the TV set 100 receiving the program of the broadcaster ZDF as it is indicated by the broadcaster logo "ZDF" 102 in the upper right corner of the screen 101. In the example shown in Figure 1B, the child protection information is not provided in the form of a logo but as a text insertion 104 providing the user with the child protection information in text form. This format of the child protection information is used for example in Germany. However, the present invention is applicable regardless of the format of the child protection information whether it is provided as a logo or as a text insertion. The method for detecting such child protection information will be described in greater detail below.

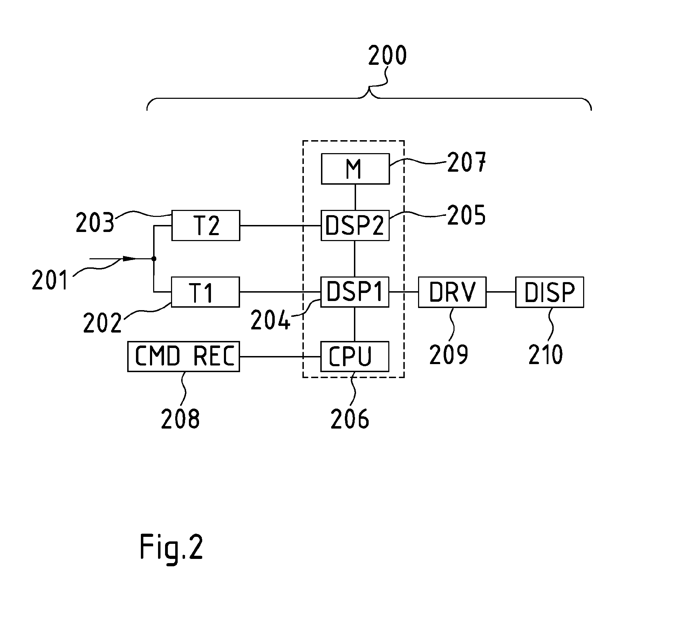

Figure 2 is a schematic block diagram of a television receiver 200. The television receiver 200 receives an input signal at a signal input 201. The input signal is a terrestrial, satellite or cable TV signal. The television receiver 200 includes a first and a second tuner (T1) 202, (T2) 203 which are connected with the first and the second digital signal processing circuit (DPS1) 204 and (DSP2) 205, respectively. A central processing unit (CPU) 206 controls the operation of the television receiver 200 and is for that purpose communicatively connected with the before mentioned components and also with a storage (M) 207 such as a volatile solid-state memory device on the one hand and on the other hand with a command signal receiver circuit (CMD REC) 208 receiving command signals. The command signals are entered by a user with a remote control (not shown) or directly on a keypad (not shown) arranged on the housing of the television receiver 200. The first tuner (T1) 202 receives the input signal and tunes to a channel selected by the user. The output signal of the tuner (T1) 202 is provided to the first digital signal processing unit circuit (DPS1) 204 performing demodulation, decompression and decoding of the received signal to generate a displayable signal. The displayable signal is provided to a driver circuit (DRV) 209 and a display device (DISP) 210. The driver circuit (DRV) 209 outputs a signal in a format that is adapted to the display device (DISP) 210, e.g. Y, CB, CR signals. For the purpose of illustrating the present invention, the block diagram shown in Figure 2 shall correspond to the TV set 100 exhibited in Figures 1A and 1B without limiting the invention to such a configuration. In this case the front face of the display device (DISP) 210 corresponds to the screen 101 shown in Figures 1A and 1B. In one embodiment of the invention the tuners (T1) 202, (T2) 203 are single tuners, in another embodiment the tuners are double tuners and yet in another embodiment the tuners are triple tuners. In consequence, the tuners are capable of receiving one or several of terrestrial, satellite or cable TV input signals provided at the signal input 201. This far, it is conventional technology which is well known in the art.

The functional blocks shown in Figure 2 are not necessarily realized as separate components. In a specific embodiment two or more of the functional blocks shown separately in Figure 2 are integrated in a single integrated circuit (IC). As an example, the integration of blocks 205 to 207 is indicated by a dashed line.

The input signal received at the signal input 201 is provided in parallel to the second tuner (T2) 203. The output signal of the second tuner (T2) 203 is provided to the second digital signal processing unit (DSP2) 205. The second digital signal processing unit (DSP2) 205 continuously processes the received input signal from the second tuner (T2) 203 to detect child protection information contained in the input signal. The child protection information is provided as logo 103 or as text insertion 104 as shown in Figures 1A and 1B, respectively. If such kind of information is found, it stores this information in the memory (M) 207 in conjunction with the channel number of the TV channel associated with the child protection information. As soon as the detection process is terminated, the second digital signal processing circuit (DSP2) 205 requests the second tuner (T2) 203 to tune to the next channel. The second tuner (T2) 203 operates as scanning tuner. It is noted that the present invention is not restricted to the use of only two tuners. In other embodiments three tuners are present in the receiver without departing from principle of the present invention namely to provide for one tuner exclusively for scanning the receivable TV channels and searching for child protection information.

The user controls the operation of the television receiver 200 by commands which are sent from a remote control device (not shown) or which are directly keyed into a keypad (not shown) arranged on the housing of the television receiver. In both cases the command signals are received by the command receiver (CMD REC) 208 and are transferred to the CPU 206. Practically, the process of searching for child protection information is implemented as software application running on the CPU 206.

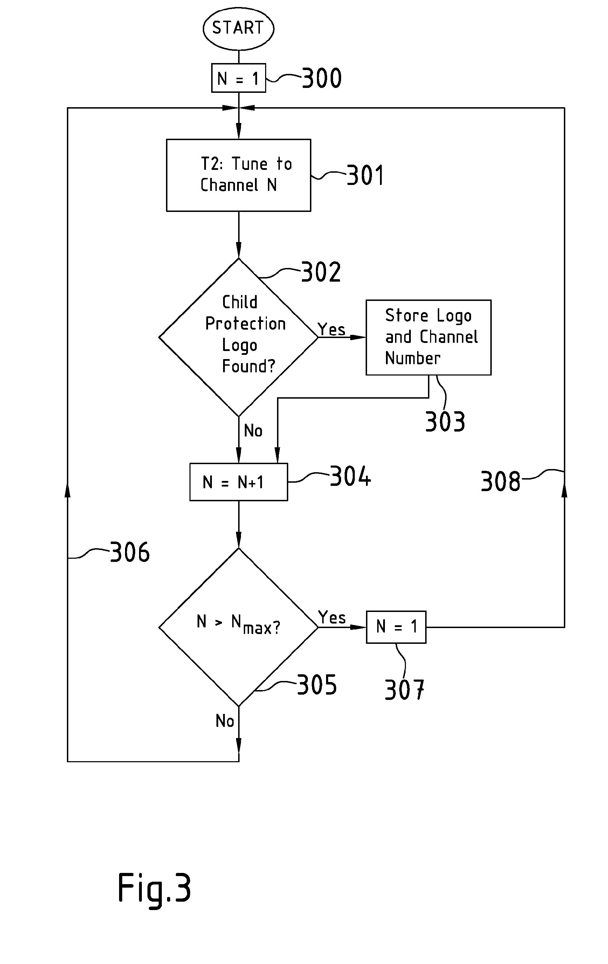

Figure 3 illustrates the process of searching for child protection information in greater detail as a flow diagram. The process is started once the TV receiver is switched on. At first the channel number N is initialized to be "N=1" in step 300. In step 301 the second tuner (T2) 203 tunes to the channel having the channel number "N". In step 302 the second digital signal processing circuit (DSP2) 205 verifies if the received program contains child protection information e.g. in the form of a logo 103 or as a text insertion 104. If such kind of information is found then the information is stored in step 303 in memory (M) 207 in conjunction with the associated channel number of the program that contained the information. After completion of step 303 or if such information is not found then the second digital signal processing circuit (DSP2) 205 moves on to step 304 and increments the channel number by one establishing a new channel number, i.e. "N = N +1". In step 305 the second digital signal processing circuit (DPS2) 205 checks if the maximum channel number Nₘₐₓ has been reached. If the current channel number is still smaller than or equal to the maximum channel number Nₘₐₓ then the second digital processing circuit (DSP2) 205 requests the second tuner (T2) 203 to tune to the new channel number as it is indicated by the return loop 306. However, if the new channel number is greater than the maximum channel number Nₘₐₓ then the channel number N is reset to 1 in step 307 and the entire process begins anew as it is indicated by return loop 308.

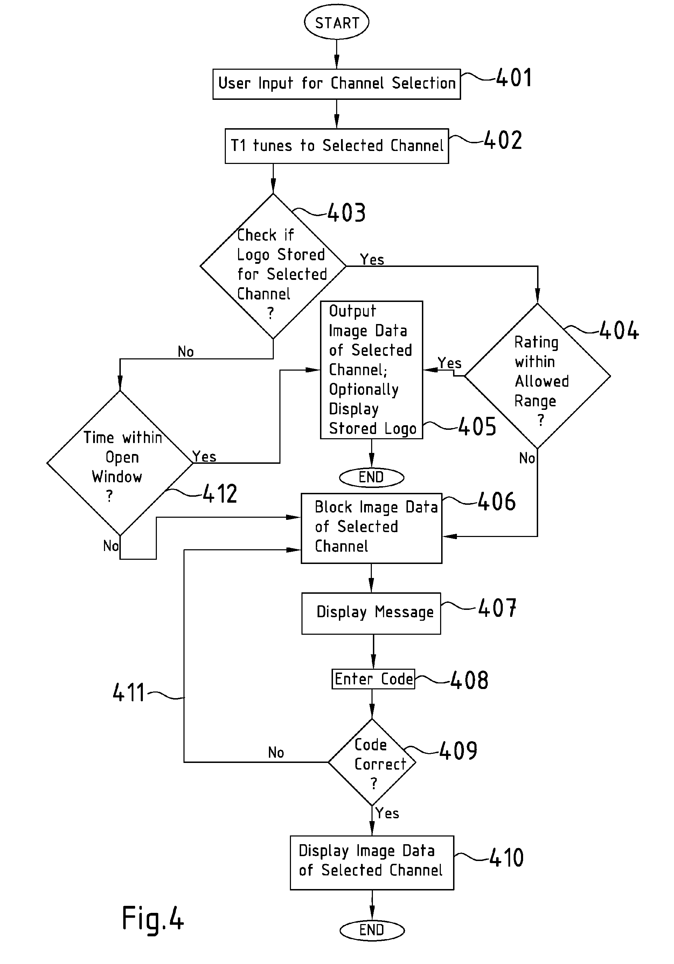

In parallel and simultaneously to the application searching for child protection information, the CPU runs a display control application. The display control application controls if images are displayed on the display 210 or not and provides user selection options in response to the presence or absence of child protection information. The details of this software application are explained in conjunction with a flow diagram shown in Figure 4.

The display control application is initiated every time the user inputs a channel selection command to the television receiver in step 401. This user command is received by the CPU which requests the tuner (T1) to tune to the selected channel in step 402. In step 403 the application checks if child protection information (logo or text insertion 103 or 104) is stored in memory (M) 207 for the selected channel number. If a child protection information is found for the selected channel number then the application checks in step 404 if the corresponding child protection rating is within an allowed range. The allowed range is predefined in the television receiver 200 and can be changed by the user by accessing a protected menu. The allowed range of child protection may be defined such as to allow programs which are not appropriate for children under the age of 10 but may block films which are not appropriate for children under the age of 16. The user may choose this setting according to the youngest child that needs to be protected from offensive content on the TV. If the rating found in the memory for the selected channel number remains within the allowed range then the television program is displayed normally in step 405. In a specific embodiment of the present invention, the stored child protection information is displayed together with the TV program for a few seconds to inform the user about the child protection information. The period of time during which the child protection information is also displayed can be adapted to the needs of the user. However, if the rating of the child protection information found in the memory 207 is not within the allowed range then the output of the images data of the selected television program is blocked in step 406. In other embodiments of the invention, the image of the selected TV program is not blocked but rather the user is offered to take a decision, i.e. either display the image or block the image or take another action e.g. record the program for viewing it at a later point in time. Optionally the recording can be protected with a code. If the image of the selected TV program is blocked a message is displayed in step 407 instead of the television program. The displayed message informs the user that the selected TV program is associated with a child protection outside the allowed range. Optionally, the user is requested to enter a code in step 408 to unblock the display of the television program.

In step 409 it is verified if the entered code is correct and if so the image of the selected channel is displayed in step 410. If the code is not correct, feedback loop 411 returns to step 406 and the image data remains blocked until the correct code is entered or the user switches to another channel. This is a useful feature for example if parents would like to watch a film in the evening which is not appropriate for their youngest child. In such a situation the parents are only required to enter the code which is secret to their children.

Going back to step 403 in which it is checked if for the selected channel number an child protection information is stored in the memory. In practice, the result may also be that there is no child protection logo available in the memory (M) 207. In this case the process checks in step 411 if the television receiver 200 operates within an allowed open time window of the day. This open time window is adjustable by the user. It starts for example at 8 o'clock in the morning and lasts until 10 o'clock in the evening. If the television receiver 200 is operated within the open time window then the image of the television program is displayed in step 405 even though no child protection information is found in the memory 207. However, if the operating time is outside of the open time window then the display of the image data of the selected television program is blocked in step 406 like in the case when the child protection information is outside the allowed range. In such a situation again a message is displayed to the user that the image of the selected TV channel is e.g. blocked and the entry of a code is required to unblock the TV channel. Then the process continues as it has been described already above.

In another embodiment of the invention, it is continuously checked if the TV receiver is operated within the open time window. When the operation time is outside the open time window this embodiment requires the entry of a code to enable the display of any TV channel regardless of the presence or absence of child protection.

Alternative embodiments of the present invention provide more flexibility with regard to the actions which are taken if certain viewing conditions are not met. E.g. if the child protection information is outside the allowed range, the image of the selected TV channel is displayed anyway but before that a message is displayed informing the user about the viewing condition which is currently not complied with.

Software algorithms capable of searching for transparent, semi-transparent or opaque logos are known in the art. One example of such technology is published in US 8,396,302 B2. However, it is noted that the present invention does not depend on what kind of technologies are chosen for the logo detection. The present invention is feasible utilizing any technology which is capable of detecting a logo 103 (Figure 1A) as well as a text insertion 104 (Figure 1B).

### List of Reference Numbers

100 TV set
101 TV screen
102 broadcaster logo
103 child protection logo
104 text insertion
200 television receiver
201 signal input
202 first tuner
203 second tuner
204 first digital signal processing unit
205 second digital signal processing unit
206 CPU
207 memory
208 command receiver
209 driver circuit
210 display
301 to 308 steps and return loops
401 to 412 steps and return loops

## Claims

1. Method for providing supplementary information in a television program, wherein the method comprises:
- scanning with a scanning tuner (203) receivable TV channels;
- detecting sequentially child protection information contained in the video signal of received TV channels; and
- storing the child protection information in conjunction with the associated TV channel in a memory (207).

2. Method according to claim 1, wherein the method further comprises the step of
- tuning to a TV channel selected by a user;
- checking if for the selected TV channel an child protection information is stored, and if such child protection information is found, then
- verifying if the child protection information is within a predefined range;
- displaying the image of the selected TV channel if the child protection information is within the predefined allowed range; and
- executing a user defined action if the child protection information is outside the predefined allowed range.

3. Method according to claim 2, wherein the method further comprises the step of displaying the stored child protection information together with the image of the selected TV channel for a limited period of time.

4. Method according to claim 2, wherein the method further comprises the step of displaying a message that the selected TV channel is associated with a child protection information outside the allowed range.

5. Method according to claim 2, wherein the method further comprises the steps of verifying if the TV receiver (200) is operated within an open time window if no child protection information is found;
displaying the image of the selected TV channel if the TV receiver is operated within the open time window; and
executing a user defined action if the TV receiver (200) is operated outside the open time window.

6. Method according to claims 4 or 5, wherein the method further comprises the step of displaying a message requesting the user to enter a code to enable the display of the selected TV channel.

7. Method according to claim 1, wherein the method further comprises the step of displaying upon user request a list of receivable TV channels in conjunction with the associated and stored child protection information.

8. Method according to one or several of claims 2 to 7, wherein the user defined action includes blocking the image of the selected TV channel.

9. Television receiver including a first and a second tuner (202, 203), a digital signal processing unit (204, 205) and a memory (207), wherein the first and the second tuner (202, 203) provide signal data to the digital signal processing circuit (204, 205), wherein the first tuner (202) is controlled to tune to the TV channel selected by a user and the second tuner (203) scans receivable TV channels, and wherein the digital signal processing unit (205) is adapted to detect child protection information in the TV channels scanned by the second tuner (203) and to store the child protection information in conjunction with the associated channel number in the memory (207).

10. Television receiver according to claim 9, wherein TV channel navigation is restricted to those TV channels associated with child protection information within a predefined allowed range or with no child protection information.

11. Television receiver according to claim 9, wherein TV channel navigation is restricted to those TV channels associated with child protection information within a predefined allowed range or no child protection information is stored for the selected TV channel when the TV receiver is operated within a predefined open time window.
